# EUROPEAN PATENT SPECIFICATION

(11) **EP 4 191 438 B1**
(45) Date of publication and mention of the grant of the patent: **16.07.2025**
(21) Application number: 20951871.1
(22) Date of filing: 01.09.2020
(51) Int. Cl.: G06F 8/41, G06F 8/75

(54) **SOFTWARE INFORMATION ORGANIZATION METHOD AND DEVICE, AND COMPUTER-READABLE MEDIUM**
VERFAHREN UND VORRICHTUNG ZUR ORGANISATION VON SOFTWAREINFORMATIONEN UND COMPUTERLESBARES MEDIUM
PROCÉDÉ ET DISPOSITIF D'ORGANISATION D'INFORMATIONS DE LOGICIEL, ET SUPPORT LISIBLE PAR ORDINATEUR

(43) Date of publication of application: 07.06.2023
(73) Proprietor: Siemens Ltd., China, Chaoyang District Beijing 100102 (CN)
(72) Inventor: WANG, Wenke, Beijing 101318 (CN); WENG, Changwei, Nanjing City Jiangsu 211100 (CN); GAO, Liang, Beijing 100032 (CN); LI, Qiang, Beijing 100022 (CN)
(74) Representative: Isarpatent
(86) International application number: PCT/CN2020/112861
(87) International publication number: WO 2022/047623

(56) References cited:
- WO-A1-2008/113682
- CN-A- 110 609 903
- CN-A- 110 716 970
- CN-A- 111 191 050
- US-A1- 2019 005 163
- US-A1- 2020 118 010
- US-B1- 10 169 208
- LI, WENPENG ET AL.: "Software Knowledge Graph Building Method for Open Source Project", JOURNAL OF FRONTIERS OF COMPUTER SCIENCE AND TECHNOLOGY, vol. 11, no. 6, 30 June 2017 (2017-06-30), pages 851 - 862, XP055907560, ISSN: 1673-9418, DOI: 10.3778/j.issn.1673-9418.1609026

## Description

### Technical Field

Embodiments of the present invention relate to the technical field of computer software analysis, and in particular to a software information organization method and device as well as a computer-readable medium.

### Background Art

Software usually consists of the following components:
1) A code: a file written in a programming language, comprising computer-readable instructions for executing a series of steps to implement predetermined functions.
2) Data: data required during code execution, which may include input data, output data, temporary data generated during code execution, etc.
3) Resources: including resource information used in the software execution process, for example, a dialog box, a menu bar, a string table, etc.
4) Documents: which may include user documents, development documents, management documents, etc. Specifically, user documents may include a user manual, an operation manual, etc.; development documents may include a software specification, a data specification, an outline design specification, etc.; management documents may include a project development plan, test reports, development progress reports, etc.

The above components of software comprise a large amount of information, which needs to be organized effectively to perform functions such as automatic code generation, system reconstruction, code quality inspection, etc. based on the effectively organized information.

US 2019/005163 A1 relates to relates to the extraction and augmentation of knowledge graphs from program source code.

US 10 169 208 B1 relates to a method for determining the similarity between a source program and a test program by generating and comparing abstract syntax trees (ASTs). The process involves creating ASTs for both the source and test programs, converting them into hash vectors, and reducing the dimensionality of these vectors.

### Summary of the Invention

Embodiments of the present invention provide a software information organization method and device and a computer-readable medium to generate a knowledge graph for software, so that the rich information included in the software can be effectively organized, and the similarity between software can be determined based on the knowledge graph.

In a first aspect, a software information organization method is provided. The method comprises: loading first software, which comprises a code, data, resources and documents; obtaining first information from the code of the first software, and generating a first knowledge graph based on the first information; obtaining second information from the data, resources and documents of the first software, and generating a second knowledge graph based on the second information; combining the first knowledge graph and the second knowledge graph into a third knowledge graph.

In a second aspect, a software information organization device is provided, which may comprise:
- a software loading module, configured to load first software, which comprises a code, data, resources and documents;
- a first information obtaining module, configured to obtain first information from the code of the first software, and generate a first knowledge graph based on the first information;
- a second information obtaining module, configured to obtain second information from the data, resources and documents of the first software, and generate a second knowledge graph based on the second information; and
- a knowledge collecting module, configured to combine the first knowledge graph and the second knowledge graph into a third knowledge graph.

In a third aspect, a software information organization device is provided, comprising: at least one memory, configured to store computer-readable code, and at least one processor, configured to call the computer-readable code to perform the steps provided in the first aspect.

In a fourth aspect, a computer-readable medium is provided, which stores a computer-readable instruction that, when executed by a processor, causes the processor to perform the steps provided in the first aspect.

To generate a knowledge graph for software, considering the fact that both the code and non-code data comprise information related to the software and that the characteristics of the code and non-code data are different, different methods are selected for information extraction to generate separate knowledge graphs, thus accurately extracting information and generating knowledge graphs to the greatest extent. In addition, combining the information of individual software into one knowledge graph can merge the same or similar structures and contents of different software, and reduce redundant information of the entire knowledge graph, thus improving the efficiency of subsequent searching for similar software.

For any of the above aspects, optionally, the first information comprises at least one of the following information: static information of the code, abstract syntax tree (AST) data, control flow information and data stream information.

If the first information comprises the static information of the code, to obtain first information from the code of the first software and generate a first knowledge graph based on the first information, a static analysis method may be used to obtain at least two static information of the code from the code of the first software and obtain the relationship between the at least two static information of the code, and the first knowledge graph is generated based on the at least two static information of the code and the relationship between the at least two static information of the code.

If the first information comprises the AST data, to obtain first information from the code of the first software and generate a first knowledge graph based on the first information, an AST tool may be used to generate the AST data based on the code of the first software, and the first knowledge graph is generated based on the relationship between AST nodes in the AST data, the relationship between the class node and the method node among the AST nodes, and the values of the AST nodes.

If the first information comprises the control flow information, to obtain first information from the code of the first software and generate a first knowledge graph based on the first information, an AST tool may be used to generate the AST data based on the code of the first software, and the control flow information is determined based on the call relationship between AST nodes in the AST data and the method marked as the initial method; the first knowledge graph is generated based on the control flow information.

If the first information comprises the data stream information, to obtain first information from the code of the first software and generate a first knowledge graph based on the first information, data calculation points may be added to each execution scenario in the code of the first software; the data stream information is obtained according to the data calculation points; the first knowledge graph is generated based on the data stream information.

To extract the first information, different methods may be used to extract various types of information from the code, for example, data stream information, control flow information, AST data and static information of the code, and a knowledge graph is generated based on the provided information. The rich information can be effectively organized and presented in the knowledge graph, which has the advantages of good visuality and ease of search.

For any of the above aspects, optionally, to obtain second information from the data, resources and documents of the first software, for the semi-structured content in the three of data, resources and documents of the first software, the second information may be obtained by use of predefined rules; and for the unstructured content in the three of data, resources and documents of the first software, the second information may be obtained by use of natural language processing.

Specifically, different methods are used to extract information depending on the different characteristics of the semi-structured content and the unstructured content.

For any of the above aspects, optionally, the following method may be used to obtain similar software:
Loading second software, which comprises a code, data, resources and documents; obtaining third information from the code of the second software, and generating a fourth knowledge graph based on the third information; obtaining fourth information from the data, resources and documents of the second software, and generating a fifth knowledge graph based on the fourth information; comparing the fourth knowledge graph and the fifth knowledge graph with the third knowledge graph, to determine software similar to the second software.

Or, third software may be loaded, which comprises a code, data, resources and documents; third information is obtained from the code of the third software and/or fourth information is obtained from the data, resources and documents of the third software; first key information for software similarity comparison is determined from the obtained information; the third knowledge graph is searched based on the first key information, to determine software meeting the key information.

Or, second key information for describing software characteristics is determined; the third knowledge graph is searched based on the second key information, to determine software meeting the second key information.

For determining the similarity between software, a plurality of optional implementation methods are provided. Specified software may be compared with a knowledge graph, to determine software similar to the specified software among the software marked by the knowledge graph. It is also possible to specify key information and to search a knowledge graph for software meeting the key information. The implementation is more flexible, and the search result better meets user needs.

### Description of the Drawings

Figure 1 is a schematic structural diagram of the software information organization device provided by an embodiment of the present invention.
Figure 2 is a flowchart of the software information organization method provided by an embodiment of the present invention.
Figure 3 is another schematic structural diagram of the software information organization device provided by an embodiment of the present invention.
Figure 4 is another flowchart of the software information organization method provided by an embodiment of the present invention.
Figure 5 is a schematic diagram of a knowledge graph obtained based on a static code analysis.
Figure 6 is a schematic diagram of a knowledge graph obtained based on AST data.

### Reference numerals in the drawings:

| | | | |
|---|---|---|---|
| 10: Software | 101: Memory | | 102: Processor |
| information organization device | | | |
| 103: Display | 20: Software information organization program | | 201: Software loading module |
| 202: First information obtaining module | 203: Second information obtaining module | | 204: Knowledge collecting module |
| 205: Software similarity comparison module | 200: Software information organization method | | S201-S215: Steps of the method |
| S2021-S2024: Sub-steps of step S202 | | | 31: First software |
| 32: Second software | 33: Third software | | 311: Code |
| 312: Data | 313: Resources | | 314: Documents |
| 2021: Static code analyzer | 2022: AST builder | | 2023: Control flow analyzer |
| 2024: Data stream analyzer | 2041: Knowledge collector | | 2042: Knowledge graph library |
| 2043: Knowledge manager | 2044: Rule manager | | 2045: Query/configuration API |
| 400: Method for software information organization and similarity comparison | | 41: Operator | 42: User |
| S401-S438: Steps of the method | 51-60: Nodes in a knowledge graph | | 501-509: Lines in a knowledge graph |
| 71-95: Nodes in a knowledge graph | 701-728: Lines in a knowledge graph | | |

### Specific Embodiments

The subject matter described herein will now be discussed by referring to some exemplary implementations. It should be understood that the discussion of these implementations is only intended to enable those skilled in the art to better understand and realize the subject matter described herein, and is not intended to limit the scope, applicability, or examples set forth in the claims. The functions and arrangement of the discussed elements may be changed without departing from the scope of embodiments of the present invention. Various processes or components may be deleted, replaced or added in each example as needed. For example, the method described herein may be executed in a sequence different from the described sequence, and various steps may be added, omitted, or combined. In addition, the features described in relation to some examples may also be combined in other examples.

As used herein, the term "comprising" and its variations is an open term that means "including but not limited to". The term "based on" means "at least partially based on". The term "one embodiment" or "an embodiment" means "at least one embodiment". The term "another embodiment" means "at least one other embodiment". The term "first", "second", etc. may refer to different or the same objects. Other definitions, either explicit or implicit, may be included below. Unless clearly indicated in the context, the definition of a term is consistent throughout the description.

Some embodiments of the present invention are described in detail below by referring to the drawings.

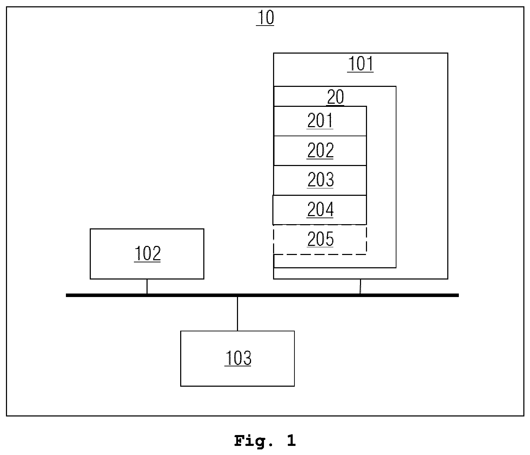

Figure 1 is a schematic structural diagram of the software information organization device 10.

The software information organization device 10 provided by the embodiments of the present invention may be implemented as a network of computer processors, to execute the software information organization method 200 in the embodiments of the present invention. The software information organization device 10 may also be a single computer as shown in Figure 1, which comprises at least one memory 101 comprising a computer-readable medium, for example, a random access memory (RAM). The device 10 further comprises at least one processor 102 coupled to the at least one memory 101. A computer-executable instruction is stored in the at least one memory 101, and, when executed by the at least one processor 102, can cause at least one processor 102 to perform the steps described herein. The at least one processor 102 may be a microprocessor, an application specific integrated circuit (ASIC), a digital signal processor (DSP), a central processing unit (CPU), a graphics processing unit (GPU), a state machine, etc. Examples of the computer-readable medium include, but are not limited to, a floppy disk, CD-ROM, magnetic disk, memory chip, ROM, RAM, ASIC, configured processor, all-optical medium, all magnetic tape or another magnetic medium, or any other medium from which a computer processor can read instructions. In addition, various other forms of computer-readable media can transmit or carry instructions to a computer, including routers, private or public networks, or other wired and wireless transmission devices or channels. The instructions may include a code in any computer programming language, including C, C++, C language, Visual Basic, java, and JavaScript.

When executed by the at least one processor 102, the at least one memory 101 shown in Figure 1 may contain a software information organization program 20, so that the at least one processor 102 executes the software information organization method 200 described in the embodiments of the present invention. The software information organization program 20 may comprise:
- a software loading module 201, configured to load first software 31, the first software 31 comprising a code, data, resources and documents;
- a first information obtaining module 202, configured to obtain first information from the code of the first software 31, and generate a first knowledge graph based on the first information;
- a second information obtaining module 203, configured to obtain second information from the data, resources and documents of the first software 31, and generate a second knowledge graph based on the second information;
- a knowledge collecting module 204, configured to combine the first knowledge graph and the second knowledge graph into a third knowledge graph.

Optionally, the device 10 may also comprise a software similarity comparison module 205, configured to compare the similarity between the first software and another piece of software or search the third knowledge graph for software meeting key information.

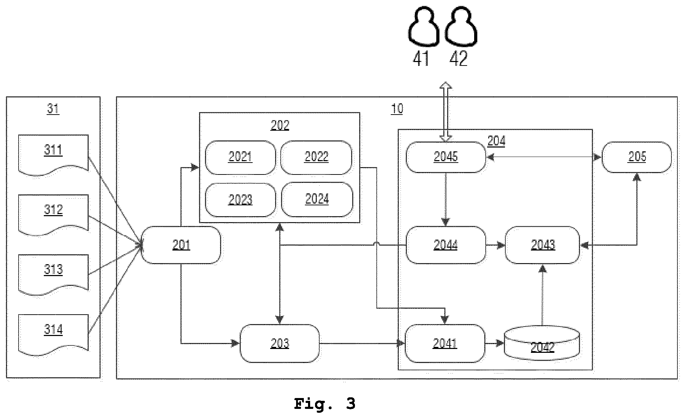

It should be mentioned that embodiments of the present invention may include devices having different architectures than that shown in Figure 1. The above architecture is only exemplary, and is used to explain the method 200 provided by the embodiments of the present invention. For example, the device 10 may also be implemented as the structure shown in Figure 3.

In addition, the above modules may also be regarded as functional modules implemented by hardware, which are used to implement various functions that are involved when the software information organization device 10 executes the software information organization method. For example, the control logics of the processes involved in the method are burnt into a chip such as a field-programmable gate array (FPGA) or a complex programmable logic device (CPLD), and these chips or devices perform the functions of the above modules. The specific implementation method can be determined according to the engineering practice.

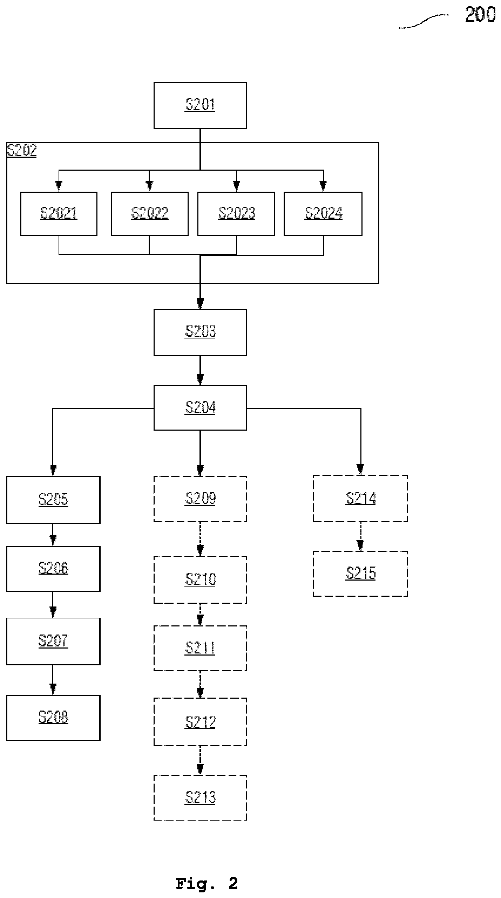

As shown in Figure 2, one exemplary method 200 according to an embodiment of the present invention comprises the following steps:
- S201: loading first software 31, which comprises a code, data, resources and documents;
- S202: obtaining first information from the code of the first software 31, and generating a first knowledge graph based on the first information;
- S203: obtaining second information from the data, resources and documents of the first software 31, and generating a second knowledge graph based on the second information;
- S204: combining the first knowledge graph and the second knowledge graph into a third knowledge graph.

Specifically, the first information may comprise at least one of the following information:
- Static information of code;
- Abstract syntax tree (AST) data;
- Control flow information;
- Data stream information.

For example, if the first information comprises static information of the code, to perform step S202 to obtain the first information from the code of the first software 31 and generate a first knowledge graph based on the first information, specifically, as shown in Figure 2, the sub-step S2021 may be performed, wherein a static analysis method is used to obtain at least two static information of the code from the code and obtain the relationship between the at least two static information of the code, and the first knowledge graph is generated based on the at least two static information of the code and the relationship between the at least two static information of the code.

Static code analysis collects software characteristic data by scanning the source code of the software. Characteristic data of software may include a program name, a program description, name of the code file, a package structure, the number of lines of the code in each file, etc. In addition, a static code analysis can be used to build an index of the source code, and the index can be used to aid a data stream analysis and a control flow analysis.

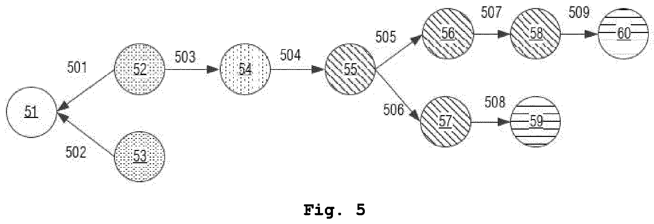

A knowledge graph is a network of entities, semantic types of entities, attributes, and relationships between entities. In a knowledge graph, a graph structure is used to present knowledge, store entities and relationships between entities. In a knowledge graph, entities are represented by nodes, and the relationships between entities are represented by lines between nodes. Figure 5 is a knowledge graph obtained based on a static code analysis. In the figure, node 52 "NGINX" and node 53 "KAFKA" are both programs, and thus they are all connected to node 51 "program". Line 501 from node 52 to node 51 represents "is one", and line 502 from node 53 to node 51 also represents "is one", which means that both node 52 and node 53 are examples of node 51. Node 52 "NGINX" "comprises" (503) node 54 "NGINX project information", node 54 "NGINX project information" comprises (504) node 55 "root directory", and node 55 "root directory" comprises subdirectories (505 and 506), being respectively node 56 "subdirectory src" and node 57 "subdirectory conf". Node 56 "subdirectory src" further comprises a subdirectory (508), being node 58 "subdirectory core". Node 58 "subdirectory core" comprises a subfile (509), being "subfile nginx.c", while node 57 "subdirectory conf" comprises a subfile (508), being node 59 "subfile fastcgi.c".

In the process of generating a knowledge graph, the knowledge graph is stored in a knowledge graph library, and may be transmitted between different devices, apparatuses or modules as needed. In the embodiments of the present invention, the JavaScript Object Notation format may be used as an intermediate data format to represent knowledge graphs, defined as follows:

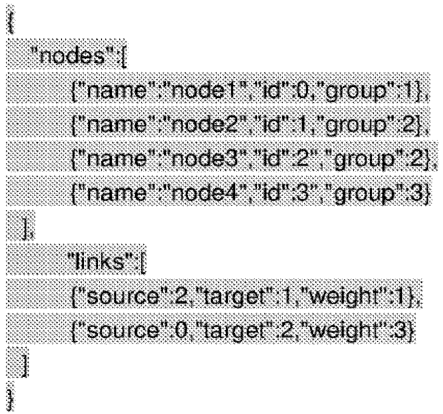

Specifically, "node" represents a node in a knowledge graph, "link" represents a line in a knowledge graph, "source" represents the starting node of a line in a knowledge graph, "target" represents the ending node of a line in a knowledge graph, "weight" represents the weight of a line, and "group" represents the type of a node.

As another example, if the first information comprises AST data, to perform step S202 to obtain first information from the code of the first software 31 and generate a first knowledge graph based on the first information, specifically, as shown in Figure 2, sub-step S2022 may be performed, wherein an AST tool is used to generate the AST data based on the code of the first software 31, and the first knowledge graph is generated based on the relationship between AST nodes in the AST data, the relationship between the class node and the method node among the AST nodes, and the values of the AST nodes.

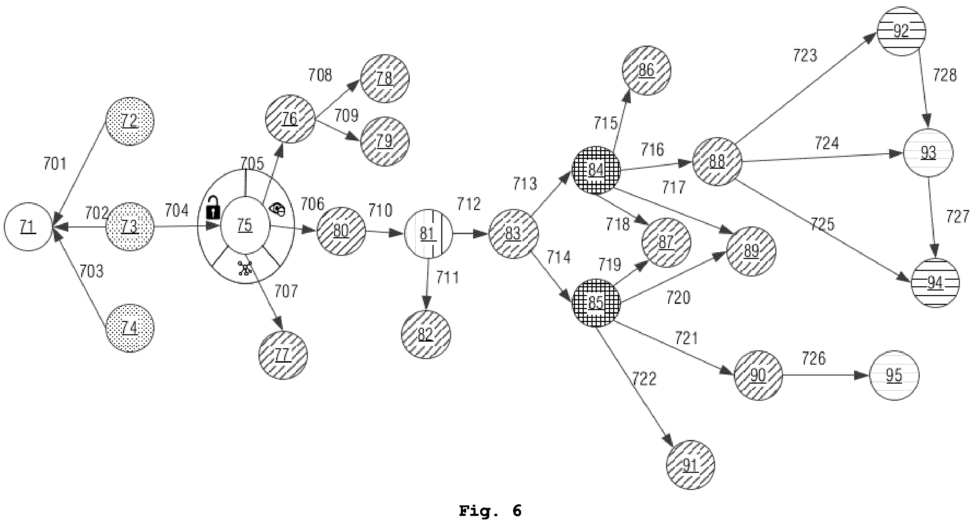

The abstract syntax tree (AST) represents the abstract syntactic structure of a source code written in a programming language in the form of a tree. Each node of the tree represents a construct that occurs in the source code. The programming language used is not considered when the AST data structure is used to represent the abstract syntactic structure of a source code. Specifically, program elements are represented as package definitions or imports, variable assignments, conditions, logical branches, etc. Knowledge generated based on AST can be used for similarity matching of software codes. Since it is an abstraction of the source code logic or syntax, AST data is barely affected by code obfuscation. Figure 6 is a knowledge graph obtained based on AST data.

In the figure, node 72 "NGINX", node 73 "BinaryC" and node 74 "KAFKA" are all examples of node 71 "program", and therefore lines 701, 702 and 703 from them to node 74 all represent "is one". Node 73 "BinaryC" comprises node 75 "AST", and line 704 from node 73 to node 75 represents "comprises". Node 75 "AST" is connected to node 76 "package", node 80 "types" and node 77 "imports" respectively, and lines 705, 706 and 707 to these nodes all represent "comprises". Node 76 "package" is connected to node 78 "astsample" and node 79 "com.sie", and lines 708 and 709 to the two nodes represent "comprises". Node 80 "types" is connected to node 81 "Type definition", and line 710 represents "comprises". Node 81 "type definition" is connected to node 82 "binary code", and line 711 represents "comprises". Node 81 "type definition" is also connected to node 83 "program body definition", and line 712 represents "comprises". Node 83 "program body definition" is respectively connected to node 84 "binary file" and node 85 "main program body", and lines 713 and 714 both represent "comprises a method". Node 84 "binary file" is connected to nodes 86 "string", 88 "block", 89 "static" and 87 "public" respectively, and lines 715, 716, 717 and 718 respectively represent "return value type", "program body", "modifier" and "modifier". Node 85 "main program body" is connected to nodes 87 "public", 89 "static", 90 "block" and 91 "no type" respectively, and lines 719, 720, 721 and 722 respectively represent "modifier", "modifier", "program body" and "return value type". Node 88 "block" is connected to nodes 92 "variable", 93 "expression" and 94 "return value" respectively, and lines 723, 724 and 725 all represent "declares". Node 92 "variable" is connected to node 93 "expression", line 728 represents "program body next step", node 93 "expression" is connected to node 94 "return value", and line 727 represents "program body next step". Node 90 "block" is connected to node 95 "for status", and line 726 represents "declares".

In brief, a piece of software comprises a code, and each code file has its corresponding AST nodes. An AST node defines child nodes such as PACKAGE, TYPES and IMPORTS. The AST node "type" defines the class-level attribute, and it has child nodes that define each method. An AST node corresponding to a class and an AST node corresponding to a method are connected via the relationship "INCLUDE_METHOD". The code specific values are also included in the knowledge graph described above.

As another example, if the first information comprises control flow information, to perform step S202 to obtain first information from the code of the first software 31 and generate a first knowledge graph based on the first information, specifically, as shown in Figure 2, sub-step S2023 may be performed, wherein an AST tool is used to generate the AST data based on the code of the first software 31 (here, if AST data has been generated in a previous step, the generated AST data may be used directly to determine the control flow information), the control flow information is determined based on the call relationship between AST nodes in the AST data and the method marked as the initial method, and the first knowledge graph is generated based on the control flow information. For example, in sub-step S2023, the call relationships between AST nodes may be collected to enrich the knowledge graph. Based on the AST data, the AST nodes corresponding to the method have a call relationship. In addition, the initial method is usually marked as "Start_Method". With the control flow information, the execution process and call relationship of the software can be established.

As another example, if the first information comprises data stream information, to perform step S202 to obtain first information from the code of the first software 31 and generate a first knowledge graph based on the first information, specifically, as shown in Figure 2, sub-step S2024 may be performed, wherein data calculation points are added to each execution scenario in the code of the first software 31, the data stream information is obtained according to the data calculation points, and the first knowledge graph is generated based on the data stream information. In the process, an execution scenario is a task with a starting point and an ending point, for example, uploading data to a database. Through sub-step S2024, various program execution declaration data can be added to the knowledge graph.

Optionally, to obtain the second information from the data, resources and documents of the first software 31 in step S203, specifically, semi-structured content and structured content may be distinguished and processed separately. For example, for the semi-structured content in the three of data, resources and documents of the first software 31, the second information is obtained by use of predefined rules; for unstructured content in the three of data, resources and documents of the first software 31, natural language processing is used to obtain the second information, wherein a document understanding algorithm may be used to understand the content of the documents; then a natural language processing algorithm may be used to analyze, understand and derive entities and relationships.

In step S204, the first knowledge graph and the second knowledge graph of the first software 31 are combined into a general knowledge graph, so that when there is new software, the knowledge points and the relationships between knowledge points in the third knowledge graph can be continuously expanded and enriched, and knowledge points can be mined deeper. Each component of the third knowledge graph is marked with a corresponding software identification, so that the corresponding similar software can be determined when the degree of similarity between new software and known software is subsequently determined. Compared with generating an independent knowledge graph for each software, generating a general knowledge graph with rich information and knowledge point correlations makes it convenient to deeply mine the relationships and connections between software, thereby making the system information of the entire knowledge graph more complete.

The steps S201 to S204 above generate and perfect the third knowledge graph. In the steps below, the degree of similarity between software can be determined based on knowledge graphs. There are various implementation methods, which include but are not limited to:
Method 1, inputting software to be compared, generating knowledge graphs separately based on the codes and non-code information, and searching the third knowledge graph for similar software based on the generated knowledge graphs.
Method 2, inputting software to be compared, obtaining information in the codes and non-code information, determining key information for software similarity comparison based on the obtained information, and searching the third knowledge graph for software meeting the key information.
Method 3, configuring key information by an operator 41, or otherwise determining key information, for example, according to several previous operation steps of the operator 41, using a big data analysis method to predict the key information of the software that the operator 41 intends to look for. Then the third knowledge graph is searched for software meeting the key information.

For method 1, specifically, the method 200 may further comprise the following steps:
- S205: Loading second software 32, which comprises a code, data, resources and documents;
- S206: Obtaining third information from the code of the second software 32, and generating a fourth knowledge graph based on the third information;
- S207: Obtaining fourth information from the data, resources and documents of the second software 32, and generating a fifth knowledge graph based on the fourth information; and
- S208: Comparing the fourth knowledge graph and the fifth knowledge graph with the general third knowledge graph described above to determine software similar to the second software 32.

For method 2, specifically, the method 200 may further comprise the following steps:
- S209: Loading third software 33, which comprises a code, data, resources and documents;
- S210: Obtaining third information from the code of the first software 33;
- S211: Obtaining fourth information from the data, resources and documents of the first software 33;

Only one or both of steps S210 and S211 may be performed, depending on the software search requirements.
- S212: Determining first key information for software similarity comparison from the information obtained previously, for example, by popping a dialog box for the operator 41 to select; or selecting desired information from various information by use of predefined rules; or forming searching conditions, i.e., first key information, by use of AND among the various information obtained.
- S213: Searching the third knowledge graph for software meeting the first key information based on the first key information.

For method 3, specifically, the method 200 may further comprise the following steps:
- S214: Determining second key information for describing software characteristics;
- S215: Searching the third knowledge graph based on the second key information to determine software meeting the second key information.

In the above process, during the search for software with the key information in the third knowledge graph, the key information may be matched according to the information of each node and the lines between the nodes in the knowledge graph to find target software. Since the software identification corresponding to each component is marked when the third knowledge graph is generated, the corresponding software can be found by matching the key information.

Figure 3 is another structure of the software information organization device 10 provided by an embodiment of the present invention. This structure may be regarded as a further refinement of the structure shown in Figure 1.

As shown in Figure 3, the software loading module 201 loads first software 31. As previously described, the first software may comprise a code 311, data 312, resources 313 and documents 314. In one aspect, the software loading module 201 sends the code 311 to the first information obtaining module 202, and the static code analyzer 2021 in the first information obtaining module 202 performs a static analysis based on the code 311 to obtain static information of the code; the AST builder 2022 in the first information obtaining module 202 generates AST data based on the code 311; the control flow analyzer 2023 in the first information obtaining module 202 determines the control flow information based on the AST data; and the data stream analyzer 2024 in the first information obtaining module 202 obtains data stream information based on the code 311. The first information obtaining module 202 generates a first knowledge graph based on the information and sends it to the knowledge collecting module 204. In another aspect, the software loading module 201 sends the data 312, resources 313 and documents 314 to the second information obtaining module 203, and the second information obtaining module 203 obtains the second information therefrom, generates a second knowledge graph based on the second information, and sends it to the knowledge collecting module 204. In this process, the second information obtaining module 203 may use predefined rules to obtain the second information for the semi-structured content in the data 312, resources 313 and documents 314 in the first software 31 and may use the natural language processing method to obtain the second information for the unstructured content in the data 312, resources 313 and documents 314 in the first software 31.

The knowledge collector 2041 in the knowledge collecting module 204 receives the first knowledge graph and the second knowledge graph, combines the first knowledge graph and the second knowledge graph into a third knowledge graph, and stores it in the knowledge graph library 2042. The device 10 may also provide a query/configuration API 2045 as an interface with the operator 41 for use by the operator 41 to configure rules and perform software similarity queries, and the configured rules may be used to generate knowledge graphs for software and perform software similarity comparison. The query/configuration API 2045 receives a command from the operator 41 and sends it to the rule manager 2044, and the rule manager 2044 configures the first information obtaining module 202, the second information obtaining module 203 and the knowledge manager 2043, respectively.

For example, the operator 41 may configure the first information obtaining module 202 to change its behavior of obtaining the first information from the code 311. In addition, the operator 41 may also configure the first information obtaining module 202 to use a different method to obtain the first information. For another example, the operator 41 may configure the rules for the second information obtaining module 203 to obtain the second information from the documents, and the parameters of the natural language processing algorithm used thereby. For another example, the operator 41 may configure the rule manager 2044 to change the algorithm for determining software similarity.

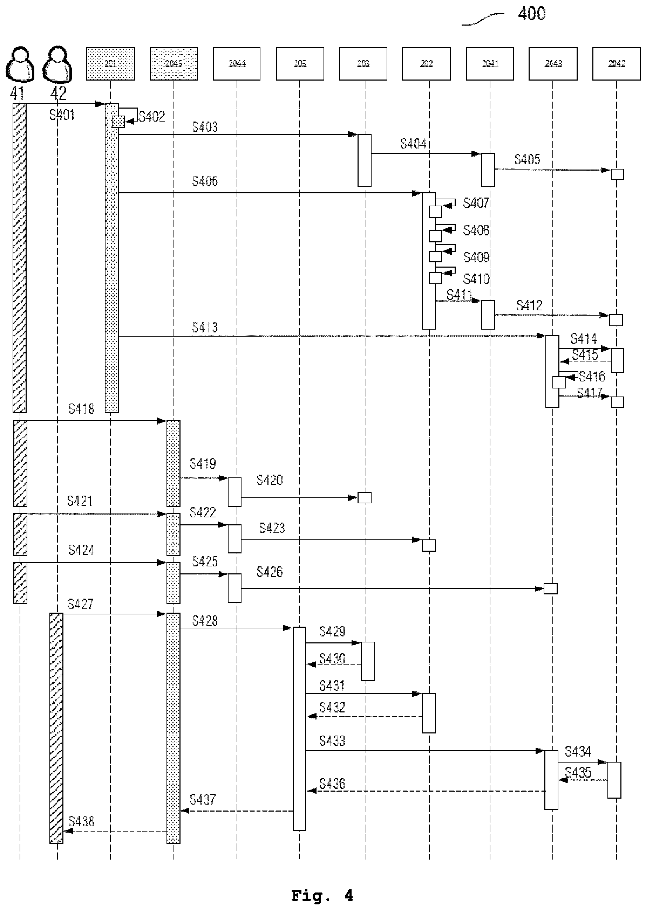

The process 400 of generating a knowledge graph and determining similar software by the device shown in Figure 3 will be described by referring to Figure 4 below. As shown in Figure 4, the process may comprise the following steps:
S401: The operator 41 loads the first software 31 to the software loading module 201.
S402: The software loading module 201 standardizes and preprocesses the received first software 31.
S403: The software loading module 201 sends the data 312, resources 313 and documents 314 in the first software 31 to the second information obtaining module 203.
S404: The second information obtaining module 203 extracts information based on the received data 312, resources 313 and documents 314, generates the second knowledge graph, and sends it to the knowledge collector 2041. Refer to step S203 described above for the specific implementation.
S405: The knowledge collector 2041 stores the second knowledge graph in the knowledge graph library 2042.
S406: The software loading module 201 sends the code 311 in the first software 31 to the first information obtaining module 202.
S407-S410: The first information obtaining module 202 extracts information based on the received code 311 and generates the first knowledge graph.

Specifically, at step S407, the static code analyzer 2021 in the first information obtaining module 202 obtains static information of the code from the code 31 by use of a static analysis method, obtains the relationships between the static information of the code, and generates the first knowledge graph based on the two information. Refer to step S2021 described above for details.

At step S408, the AST builder 2022 in the first information obtaining module 202 uses an AST tool to generate AST data based on the code 311 and generates the first knowledge graph based on the relationships between AST nodes in the AST data, the relationships between the class nodes and the method nodes in the AST nodes, and the values of the AST nodes. Refer to step S2022 described above for details.

At step S409, the control flow analyzer 2023 in the first information obtaining module 202 may use an AST tool to generate AST data based on the code 311, determine the control flow information based on the call relationships between AST nodes in the AST data and the method marked as the initial method, and generate the first knowledge graph based on the control flow information. Refer to step S2023 described above for details.

At step S410, the data stream analyzer 2024 in the first information obtaining module 202 may add data calculation points to each execution scenario in the code 311, obtain data stream information according to the data calculation points, and generate the first knowledge graph based on the data stream information. Refer to step S2024 described above for details.

Specifically, the static code analyzer 2021, the AST builder 2022, the control flow analyzer 2023 and the data stream analyzer 2024 may generate knowledge graphs separately based on the code 311, which are later combined into the first knowledge graph. They may also send the knowledge graph generated separately to the knowledge collector 2041, and the knowledge collector 2041 or a subsequent device completes the combination of the knowledge graphs.

S411: The first information obtaining module 202 sends the first knowledge graph to the knowledge collector 2041.

S412: The knowledge collector 2041 stores the first knowledge graph in the knowledge graph library 2042.

S413: The software loading module 201 sends a message to the knowledge manager 2043, triggering the knowledge manager 2043 to load the first knowledge graph and the second knowledge graph from the knowledge graph library 2042, and to merge the first knowledge graph and the second knowledge graph into the third knowledge graph. Specifically, to combine knowledge graphs, knowledge of the same or similar methods or classes may be combined. When the same or similar methods of different software are merged into the same node, the performance and accuracy of the decision on software similarity can be improved.

S414: The knowledge manager 2043 sends a message to the knowledge graph library 2042, to obtain the first knowledge graph and the second knowledge graph from the knowledge graph library 2042.

S415: The knowledge graph library 2042 responds to the message sent by the knowledge manager 2043, and returns the first knowledge graph and the second knowledge graph to the knowledge manager 2043.

S416: The knowledge manager 2043 combines the first knowledge graph and the second knowledge graph into the third knowledge graph library 2042.

S417: The knowledge graph library 2042 stores the combined third knowledge graph in the knowledge graph library 2042.

The operator 41 may configure the rules of software information obtaining, knowledge graph generation and knowledge graph combination through the following steps S418 to S426, specifically:
S418: The operator 41 sends an instruction to the query/configuration API 2045, requesting to configure the second information obtaining module 203.
S419: The query/configuration API 2045 forwards the instruction to the rule manager 2044, requesting to configure the second information obtaining module 203.
S420: The rule manager 2044 generates rules according to the instruction, and configures the rules used by the second information obtaining module 203 for obtaining the second information, for example, the parameters of the natural language processing algorithm (for obtaining said second information from the unstructured content of the documents, data and resources of the software), and the rules for obtaining document information (for obtaining said second information from the semi-structured content of the documents, data and resources of the software).
S421: The operator 41 sends an instruction to the query/configuration API 2045, requesting to configure the first information obtaining module 202.
S422: The query/configuration API 2045 forwards the instruction to the rule manager 2044, requesting to configure the first information obtaining module 202.
S423: The rule manager 2044 generates rules according to the instruction, and configures the rules used by the first information obtaining module 202 for obtaining the first information from the code of the software code to control the behavior and process of the first information obtaining module 202 to obtain information from the code.
S424: The operator 41 sends an instruction to the query/configuration API 2045, requesting to configure the knowledge manager 2043.
S425: The query/configuration API 2045 forwards the instruction to the rule manager 2044, requesting to configure the knowledge manager 2043.
S426: The rule manager 2044 generates rules according to the instruction and configures the rules used by the knowledge manager 2043 for performing software similarity comparison, for example, algorithm parameters, etc.

Specifically, steps S418 to S426 may be performed before step S401, or during the process when steps S401 to S417 are performed, or after step S417 is performed, so that the rules can be modified flexibly.

In the following steps S427 to S438, the user 42 uses the software information organization device 10 provided by the embodiments of the present invention to search for software similar to the second software 42. In the steps below, method 1 for determining the similarity between software described above is used.

S427: The user 42 sends an instruction to the query/configuration API 2045, requesting to search for software similar to the second software 32.

S428: The query/configuration API 2045 forwards the instruction to the software similarity comparison module 205, requesting to search for software similar to the second software 32.

S429: The software similarity comparison module 205 sends the second software 32 to the second information obtaining module 203, or it may only send the data, resources and documents in the second software 32.

S430: The second information obtaining module 203 extracts the fourth information from the received data, resources and documents in the second software 32, generates a fifth knowledge graph based on the fourth information (in the same process for obtaining information or generating the knowledge graph for the first software 31, which is not detailed here), and returns it to the software similarity comparison module 205.

S431: The software similarity comparison module 205 sends the second software 32 to the first information obtaining module 202, or it may only send the code in the second software 32.

S432: The first information obtaining module 202 extracts the third information from the received code in the second software 32, generates a fourth knowledge graph based on the third information (in the same process for obtaining information or generating the knowledge graph for the first software 31, which is not detailed here), and returns it to the software similarity comparison module 205.

S433: The software similarity comparison module 205 sends a message to the knowledge manager 2043, requesting to obtain the third knowledge graph, i.e., the combined general knowledge graph stored in the knowledge graph library 2042.

S434: The knowledge manager 2043 sends a message to the knowledge graph library 2042, requesting to obtain the third knowledge graph.

S435: The knowledge graph library 2042 responds to the message and returns the third knowledge graph to the knowledge manager 2043.

S436: The knowledge manager 2043 returns the third knowledge graph to the software similarity comparison module 205.

S437: The software similarity comparison module 205 compares the fourth knowledge graph and the fifth knowledge graph with the third knowledge graph to determine software similar to the second software 32 (for example, software whose similarity is greater than a preset similarity threshold). The similar software determined by the software similarity comparison module 205 or the information of the software is returned to the query/configuration API 2045.

S438: The query/configuration API 2045 returns the similar software or software information received to the user 42.

In addition, embodiments of the present invention also provide a computer-readable medium storing a computer-readable instruction, which, when executed by a processor, causes the processor to perform the software information organization method described above. Examples of the computer-readable medium include floppy disks, hard disks, magneto-optical disks, optical disks (such as CD-ROM, CD-R, CD-RW, DVD-ROM, DVD-RAM, DVD-RW, and DVD+RW), magnetic tapes, volatile memory cards and ROMs. Optionally, the computer-readable instruction may be downloaded from a server computer or a cloud via a communication network.

In summary of the above, the embodiments of the present invention provide a software information organization method and device and a computer-readable medium to generate a knowledge graph for software, so that the rich information included in the software can be effectively organized, and the degree of similarity between software can be determined based on the knowledge graph.

When knowledge graphs are generated for software, information of different software is combined to generate one knowledge graph, and the software identifications are marked in the corresponding parts of the knowledge graph, so that the same or similar structures and contents of different software can be combined, reducing redundant information of the entire knowledge graph, and the software identifications are marked in the knowledge graph, facilitating subsequent search for similar software, and improving the efficiency of the calculation of software similarity (with more efficient searching since redundant information is removed from the knowledge graph and only one knowledge graph is searched).

For determining the degree of similarity between software, a plurality of optional implementation methods are provided. Specified software may be compared with a knowledge graph to determine software similar to the specified software among the software marked by the knowledge graph. It is also possible to specify key information and to search a knowledge graph for software meeting the key information. The implementation is more flexible, and the search result better meets user needs.

It should be noted that not all steps and modules in the above processes and system structural diagrams are necessary, and some steps or modules may be ignored based on actual needs. The sequence of execution of the steps is not fixed, and can be adjusted as needed. The system structure described in the above embodiments may be a physical structure or a logical structure, i.e., some modules may be implemented by the same physical entity, or some modules may be implemented by multiple physical entities, or may be implemented by certain components in several independent devices working together.

## Claims

1. A software information organization method (200), comprising:
- loading (S201) first software (31), which comprises a code, data, resources and documents;
- obtaining (S202) first information from the code of the first software (31), and generating a first knowledge graph based on the first information;
- obtaining (S203) second information from the data, resources and documents of the first software (31), and generating a second knowledge graph based on the second information;
- combining (S204) the first knowledge graph and the second knowledge graph into a third knowledge graph;
- storing the third knowledge graph in a knowledge graph library;
- receiving a user instruction to search for software similar to a second software;
- loading (S205) the second software (32), which comprises a code, data, resources and documents;
- obtaining (S206) third information from the code of the second software (32), and generating a fourth knowledge graph based on the third information;
- obtaining (S207) fourth information from the data, resources and documents of the second software (32), and generating a fifth knowledge graph based on the fourth information;
- comparing (S208) the fourth knowledge graph and the fifth knowledge graph with one or more knowledge graphs stored in the knowledge graph library, to determine software similar to the second software (32).

2. The method as claimed in claim 1, **characterized in that** the first information comprises at least one of the following information:
- static information of the code;
- abstract syntax tree (AST) data;
- control flow information;
- data stream information.

3. The method as claimed in claim 2, **characterized in that** the first information comprises the static information of the code, and obtaining (S202) first information from the code of the first software (31) and generating a first knowledge graph based on the first information comprises:
- using a static analysis method to obtain (S2021) at least two static information of the code from the code of the first software (31), and
- obtaining a relationship between the at least two static information of the code and generating the first knowledge graph based on the at least two static information of the code and the relationship between the at least two static information of the code.

4. The method as claimed in claim 2, **characterized in that** the first information comprises the AST data, and obtaining (S202) first information from the code of the first software (31) and generating a first knowledge graph based on the first information comprises:
- using an AST tool to generate (S2022) the AST data based on the code of the first software (31), and
- generating the first knowledge graph based on a relationship between AST nodes in the AST data, a relationship between a class node and a method node among the AST nodes, and values of the AST nodes.

5. The method as claimed in claim 2, **characterized in that** the first information comprises the control flow information, and obtaining (S202) first information from the code of the first software (31) and generating a first knowledge graph based on the first information comprises:
- using an AST tool to generate (S2023) the AST data based on the code of the first software (31), and
- determining the control flow information based on a call relationship between AST nodes in the AST data and a method marked as an initial method;
- generating the first knowledge graph based on the control flow information.

6. The method as claimed in claim 2, **characterized in that** the first information comprises the data stream information, and obtaining (S202) first information from the code of the first software (31) and generating a first knowledge graph based on the first information comprises:
- adding (S2024) data calculation points to each execution scenario in the code of the first software (31);
- obtaining the data stream information according to the data calculation points;
- generating the first knowledge graph based on the data stream information.

7. The method claimed in claim 1, **characterized in that** obtaining (S203) second information from the data, resources and documents of the first software (31) comprises:
- for semi-structured content in the three of data, resources and documents of the first software (31), obtaining the second information by use of predefined rules; and
- for unstructured content in the three of data, resources and documents of the first software (31), obtaining the second information by use of natural language processing.

8. The method as claimed in claim 1, **characterized in that** it further comprises:
- loading (S209) third software (33), which comprises a code, data, resources and documents;
- obtaining (S210) third information from the code of the third software (33) and/or obtaining (S211) fourth information from the data, resources and documents of the third software (33);
- determining (S212) first key information for software similarity comparison from the obtained information;
- searching (S213) the third knowledge graph based on the first key information, to determine software meeting the key information.

9. The method as claimed in claim 1, **characterized in that** it further comprises:
- determining (S214) second key information for describing software characteristics;
- searching (S215) the third knowledge graph based on the second key information, to determine software meeting the second key information.

10. A software information organization device (10), **characterized in that** it comprises:
at least one memory (101), configured to store computer-readable code;
at least one processor (102), configured to call the computer-readable code to execute the method as claimed in any one of claims 1 to 9.

11. A computer-readable medium, **characterized in that** the computer-readable medium stores a computer-readable instruction, which, when executed by a processor, causes the processor to execute the method as claimed in any of claims 1 to 9.

## Patentansprüche

1. Verfahren (200) zur Organisation von Softwareinformationen, das Folgendes umfasst:
- Laden (S201) erster Software (31), die einen Code, Daten, Ressourcen und Dokumente umfasst;
- Erhalten (S202) erster Informationen aus dem Code der ersten Software (31) und Erzeugen eines ersten Wissensgraphen basierend auf den ersten Informationen;
- Erhalten (S203) zweiter Informationen aus den Daten, Ressourcen und Dokumenten der ersten Software (31) und Erzeugen eines zweiten Wissensgraphen basierend auf den zweiten Informationen;
- Kombinieren (S204) des ersten Wissensgraphen und des zweiten Wissensgraphen zu einem dritten Wissensgraphen;
- Speichern des dritten Wissensgraphen in einer Wissensgraphenbibliothek;
- Empfangen einer Benutzeranweisung zum Suchen nach Software ähnlich einer zweiten Software;
- Laden (S205) der zweiten Software (32), die einen Code, Daten, Ressourcen und Dokumente umfasst;
- Erhalten (S206) dritter Informationen aus dem Code der zweiten Software (32) und Erzeugen eines vierten Wissensgraphen basierend auf den dritten Informationen;
- Erhalten (S207) vierter Informationen aus den Daten, Ressourcen und Dokumenten der zweiten Software (32) und Erzeugen eines fünften Wissensgraphen basierend auf den vierten Informationen;
- Vergleichen (S208) des vierten Wissensgraphen und des fünften Wissensgraphen mit einem oder mehreren Wissensgraphen, die in der Wissensgraphenbibliothek gespeichert sind, um Software ähnlich der zweiten Software (32) zu bestimmen.

2. Verfahren nach Anspruch 1, **dadurch gekennzeichnet, dass** die ersten Informationen mindestens eine der folgenden Informationen umfassen:
- statische Informationen des Codes;
- Daten eines abstrakten Syntaxbaums (AST);
- Steuerflussinformationen;
- Datenstrominformationen.

3. Verfahren nach Anspruch 2, **dadurch gekennzeichnet, dass** die ersten Informationen die statischen Informationen des Codes umfassen und das Erhalten (S202) erster Informationen aus dem Code der ersten Software (31) und Erzeugen eines ersten Wissensgraphen basierend auf den ersten Informationen Folgendes umfasst:
- Verwenden eines statischen Analyseverfahrens zum Erhalten (S2021) mindestens zweier statischer Informationen des Codes aus dem Code der ersten Software (31) und
- Erhalten einer Beziehung zwischen den mindestens zwei statischen Informationen des Codes und Erzeugen des ersten Wissensgraphen basierend auf den mindestens zwei statischen Informationen des Codes und der Beziehung zwischen den mindestens zwei statischen Informationen des Codes.

4. Verfahren nach Anspruch 2, **dadurch gekennzeichnet, dass** die ersten Informationen die AST-Daten umfassen und das Erhalten (S202) erster Informationen aus dem Code der ersten Software (31) und Erzeugen eines ersten Wissensgraphen basierend auf den ersten Informationen Folgendes umfasst:
- Verwenden eines AST-Tools zum Erzeugen (S2022) der AST-Daten basierend auf dem Code der ersten Software (31) und
- Erzeugen des ersten Wissensgraphen basierend auf einer Beziehung zwischen AST-Knoten in den AST-Daten einer Beziehung zwischen einem Klassenknoten und einem Verfahrensknoten unter den AST-Knoten und Werten der AST-Knoten.

5. Verfahren nach Anspruch 2, **dadurch gekennzeichnet, dass** die ersten Informationen die Steuerflussinformationen umfassen und das Erhalten (S202) erster Informationen aus dem Code der ersten Software (31) und Erzeugen eines ersten Wissensgraphen basierend auf den ersten Informationen Folgendes umfasst:
- Verwenden eines AST-Tools zum Erzeugen (S2023) der AST-Daten basierend auf dem Code der ersten Software (31) und
- Bestimmen der Steuerflussinformationen basierend auf einer Aufrufbeziehung zwischen AST-Knoten in den AST-Daten und einem Verfahren, das als ein anfängliches Verfahren markiert ist;
- Erzeugen des ersten Wissensgraphen basierend auf den Steuerflussinformationen.

6. Verfahren nach Anspruch 2, **dadurch gekennzeichnet, dass** die ersten Informationen die Datenstrominformationen umfassen und das Erhalten (S202) erster Informationen aus dem Code der ersten Software (31) und Erzeugen eines ersten Wissensgraphen basierend auf den ersten Informationen Folgendes umfasst:
- Hinzufügen (S2024) von Datenberechnungspunkten zu jedem Ausführungsszenario in dem Code der ersten Software (31);
- Erhalten der Datenstrominformationen gemäß den Datenberechnungspunkten;
- Erzeugen des ersten Wissensgraphen basierend auf den Datenstrominformationen.

7. Verfahren nach Anspruch 1, **dadurch gekennzeichnet, dass** das Erhalten (S203) zweiter Informationen aus den Daten, Ressourcen und Dokumenten der ersten Software (31) Folgendes umfasst:
- für halbstrukturierte Inhalte in den drei von den Daten, Ressourcen und Dokumenten der ersten Software (31) Erhalten der zweiten Informationen durch die Verwendung vordefinierter Regeln; und
- für unstrukturierte Inhalte in den drei von den Daten, Ressourcen und Dokumenten der ersten Software (31) Erhalten der zweiten Informationen durch die Verwendung von Verarbeitung natürlicher Sprache.

8. Verfahren nach Anspruch 1, **dadurch gekennzeichnet, dass** es ferner Folgendes umfasst:
- Laden (S209) dritter Software (33), die einen Code, Daten, Ressourcen und Dokumente umfasst;
- Erhalten (S210) dritter Informationen aus dem Code der dritten Software (33) und/oder Erhalten (S211) vierter Informationen aus den Daten, Ressourcen und Dokumenten der dritten Software (33);
- Bestimmen (S212) erster Schlüsselinformationen für einen Softwareähnlichkeitsvergleich aus den erhaltenen Informationen;
- Durchsuchen (S213) des dritten Wissensgraphen basierend auf den ersten Schlüsselinformationen, um die Software zu bestimmen, die die Schlüsselinformationen erfüllt.

9. Verfahren nach Anspruch 1, **dadurch gekennzeichnet, dass** es ferner Folgendes umfasst:
- Bestimmen (S214) zweiter Schlüsselinformationen zum Beschreiben von Softwarecharakteristiken;
- Durchsuchen (S215) des dritten Wissensgraphen basierend auf den zweiten Schlüsselinformationen, um Software zu bestimmen, die die zweiten Schlüsselinformationen erfüllt.

10. Vorrichtung (10) zur Organisation von Softwareinformationen, **dadurch gekennzeichnet, dass** sie Folgendes umfasst:
mindestens einen Speicher (101), der dazu ausgelegt ist, computerlesbaren Code zu speichern;
mindestens einen Prozessor (102), der dazu ausgelegt ist, den computerlesbaren Code aufzurufen, um das Verfahren nach einem der Ansprüche 1 bis 9 auszuführen.

11. Computerlesbares Medium, **dadurch gekennzeichnet, dass** das computerlesbare Medium eine computerlesbare Anweisung speichert, die, wenn sie von einem Prozessor ausgeführt wird, den Prozessor veranlasst, das Verfahren nach einem der Ansprüche 1 bis 9 auszuführen.

## Revendications

1. Procédé (200) d'organisation d'informations de logiciels, comprenant :
- le chargement (S201) d'un premier logiciel (31), qui comprend un code, des données, des ressources et des documents ;
- l'obtention (S202) de premières informations à partir du code du premier logiciel (31), et la génération d'un premier graphe de connaissances sur la base des premières informations ;
- l'obtention (S203) de deuxièmes informations à partir des données, des ressources et des documents du premier logiciel (31), et la génération d'un deuxième graphe de connaissances sur la base des deuxièmes informations ;
- la combinaison (S204) du premier graphe de connaissances et du deuxième graphe de connaissances en un troisième graphe de connaissances ;
- le stockage du troisième graphe de connaissances dans une bibliothèque de graphes de connaissances ;
- la réception d'une instruction d'utilisateur pour rechercher un logiciel similaire à un deuxième logiciel ;
- le chargement (S205) du deuxième logiciel (32), qui comprend un code, des données, des ressources et des documents ;
- l'obtention (S206) de troisièmes informations à partir du code du deuxième logiciel (32), et la génération d'un quatrième graphe de connaissances sur la base des troisièmes informations ;
- l'obtention (S207) de quatrièmes informations à partir des données, des ressources et des documents du deuxième logiciel (32), et la génération d'un cinquième graphe de connaissances sur la base des quatrièmes informations ;
- la comparaison (S208) du quatrième graphe de connaissances et du cinquième graphe de connaissances avec un ou plusieurs graphes de connaissances stockés dans la bibliothèque de graphes de connaissances, afin de déterminer un logiciel similaire au deuxième logiciel (32).

2. Procédé selon la revendication 1, **caractérisé en ce que** les premières informations comprennent :
- des informations statiques du code ; et/ou
- des données d'arbre de syntaxe abstraite (AST) ; et/ou
- des informations de flux de commande ; et/ou
- des informations de flot de données.

3. Procédé selon la revendication 2, **caractérisé en ce que** les premières informations comprennent les informations statiques du code, et l'obtention (S202) de premières informations à partir du code du premier logiciel (31) et la génération d'un premier graphe de connaissances sur la base des premières informations comprennent :
- l'utilisation d'une méthode d'analyse statique afin d'obtenir (S2021) au moins deux informations statiques du code à partir du code du premier logiciel (31), et
- l'obtention d'une relation entre les au moins deux informations statiques du code et la génération du premier graphe de connaissances sur la base des au moins deux informations statiques du code et de la relation entre les au moins deux informations statiques du code.

4. Procédé selon la revendication 2, **caractérisé en ce que** les premières informations comprennent les données AST, et l'obtention (S202) de premières informations à partir du code du premier logiciel (31) et la génération d'un premier graphe de connaissances sur la base des premières informations comprennent :
- l'utilisation d'un outil AST afin de générer (S2022) les données AST à partir du code du premier logiciel (31), et
- la génération du premier graphe de connaissances sur la base d'une relation entre des nœuds AST dans les données AST, d'une relation entre un nœud de classe et un nœud de méthode parmi les nœuds AST, et de valeurs des nœuds AST.

5. Procédé selon la revendication 2, **caractérisé en ce que** les premières informations comprennent les informations de flux de commande, et l'obtention (S202) de premières informations à partir du code du premier logiciel (31) et la génération d'un premier graphe de connaissances sur la base des premières informations comprennent :
- l'utilisation d'un outil AST afin de générer (S2023) les données AST à partir du code du premier logiciel (31), et
- la détermination des informations de flux de commande sur la base d'une relation d'appel entre des nœuds AST dans les données AST et une méthode marquée comme méthode initiale ;
- la génération du premier graphe de connaissances sur la base des informations de flux de commande.

6. Procédé selon la revendication 2, **caractérisé en ce que** les premières informations comprennent les informations de flot de données, et l'obtention (S202) de premières informations à partir du code du premier logiciel (31) et la génération d'un premier graphe de connaissances sur la base des premières informations comprennent :
- l'ajout (S2024) des points de calcul de données à chaque scénario d'exécution dans le code du premier logiciel (31) ;
- l'obtention des informations de flot de données en fonction des points de calcul des données ;
- la génération du premier graphe de connaissances sur la base des informations de flot de données.

7. Procédé selon la revendication 1, **caractérisé en ce que** l'obtention (S203) de deuxièmes informations à partir des données, des ressources et des documents du premier logiciel (31) comprend :
- pour un contenu semi-structuré dans la trilogie données, ressources et documents du premier logiciel (31), l'obtention des deuxièmes informations au moyen de règles prédéfinies ; et
- pour un contenu non structuré dans la trilogie données, ressources et documents du premier logiciel (31), l'obtention des deuxièmes informations au moyen d'un traitement du langage naturel.

8. Procédé selon la revendication 1, **caractérisé en ce qu'**il comprend en outre :
- le chargement (S209) d'un troisième logiciel (33), qui comprend un code, des données, des ressources et des documents ;
- l'obtention (S210) de troisièmes informations à partir du code du troisième logiciel (33) et/ou l'obtention (S211) de quatrièmes informations à partir des données, des ressources et des documents du troisième logiciel (33) ;
- la détermination (S212) de premières informations clés pour une comparaison de similarité de logiciels à partir des informations obtenues ;
- le parcours (S213) du troisième graphe de connaissances sur la base des premières informations clés, afin de déterminer un logiciel qui vérifie les informations clés.

9. Procédé selon la revendication 1, **caractérisé en ce qu'**il comprend en outre :
- la détermination (S214) de deuxièmes informations clés pour décrire des caractéristiques d'un logiciel ;
- le parcours (S215) du troisième graphe de connaissances sur la base des deuxièmes informations clés, afin de déterminer un logiciel qui vérifie les deuxièmes informations clés.

10. Dispositif (10) d'organisation d'informations de logiciels, **caractérisé en ce qu'**il comprend :
au moins une mémoire (101), configurée pour stocker un code lisible par ordinateur ;
au moins un processeur (102), configuré pour appeler le code lisible par ordinateur pour exécuter le procédé selon l'une quelconque des revendications 1 à 9.

11. Support lisible par ordinateur, le support lisible par ordinateur étant **caractérisé en ce qu'**il stocke une instruction lisible par ordinateur qui, lorsqu'elle est exécutée par un processeur, amène le processeur à exécuter le procédé selon l'une quelconque des revendications 1 à 9.
